# EUROPEAN PATENT APPLICATION

(11) **EP 4 651 123 A1**
(43) Date of publication of application: **19.11.2025**
(21) Application number: 25176283.7
(22) Date of filing: 14.05.2025
(51) Int. Cl.: G09G 3/34, G06F 3/14, G06F 3/147

(54) **SERIAL ELECTRONIC LABEL**

(30) Priority: 15.05.2024 TW 113118007
(71) Applicant: Hu, Chung-Ming, 721003 Tainan City (TW)
(72) Inventor: Hu, Chung-Ming, 721003 Tainan City (TW)
(74) Representative: Becker, Eberhard

(57) **Abstract**

A serial electronic label (100), including a plurality of energy saving displays (110, 111, 112, 113, 114, 115, 116, 117, 118, 119) arranged in a row and a controller (120). Each of the energy saving displays (110, 111, 112, 113, 114, 115, 116, 117, 118, 119) has a frame update time when updating a display frame. The controller (120) is electrically connected to the energy saving displays (110, 111, 112, 113, 114, 115, 116, 117, 118, 119), and configured to make the energy saving displays (110, 111, 112, 113, 114, 115, 116, 117, 118, 119) update the display frames thereof in a sequence by a one-to-plurality control method, wherein the frame update times of any two energy saving displays (110, 111, 112, 113, 114, 115, 116, 117, 118, 119) adjacent in the sequence partially overlap each other.

## Description

### BACKGROUND

### Technical Field

The disclosure relates to an electronic label, and more particularly to a serial electronic label.

### Description of Related Art

The development trend of electronic labels (e.g., electronic shelf labels (ESL)) is influenced by multiple factors, including environmental protection, energy saving, labor saving, and smart retail. As an electronic label, electronic paper is favored due to advantages such as power saving and low carbon. Compared with traditional paper labels, electronic labels have the characteristic of being replaceable in real time and may be updated in real time with systems to reduce human error rate and further save the labor cost of replacing labels.

However, when electronic paper is used as an electronic label, especially electronic paper with three colors or more, multiple flashes are required to move the color particles of the electronic paper to the required positions for displaying the correct frame when updating and switching display frames, so more than 10 seconds are needed to complete the update. During the waiting time for frame update, the electronic label has no display effect, thus causing inconvenience in use.

### SUMMARY

The disclosure provides a serial electronic label, which may achieve a special display effect by allocating a plurality of frame update times of a plurality of energy saving displays. An effect of reducing labor cost for electronic labels is also compatible.

An embodiment of the disclosure provides a serial electronic label. The serial electronic label includes a plurality of energy saving displays arranged in a row and a controller. Each of the plurality of energy saving displays has a frame update time when updating a display frame. The controller is electrically connected to the plurality of energy saving displays and is configured to make the plurality of energy saving displays update the plurality of display frames in a sequence by a one-to-plurality control method. The plurality of frame update times of any two energy saving displays adjacent in the sequence partially overlap each other.

In the serial electronic label in the embodiment of the disclosure, the plurality of energy saving displays update the plurality of display frames in a sequence, and the plurality of frame update times of any two energy saving displays adjacent in the sequence partially overlap each other. Therefore, a special display effect such as a marquee-like effect may be achieved by allocating the plurality of frame update times of the plurality of energy saving displays. An effect of reducing labor cost for electronic labels is also compatible.

### BRIEF DESCRIPTION OF THE DRAWINGS

FIG. 1 is a schematic structural diagram of a serial electronic label in an embodiment of the disclosure.
FIG. 2 is a frame update timing diagram of the serial electronic label of FIG. 1.
FIG. 3 is another frame update timing diagram of the serial electronic label of FIG. 1.

### DESCRIPTION OF THE EMBODIMENTS

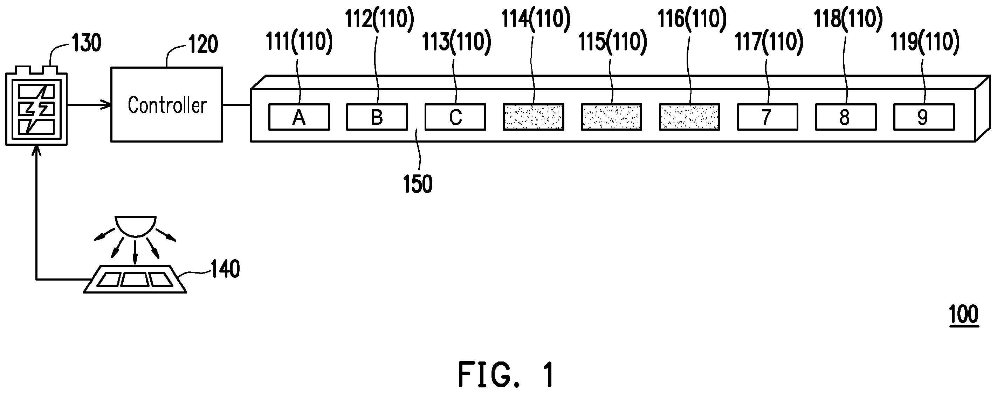

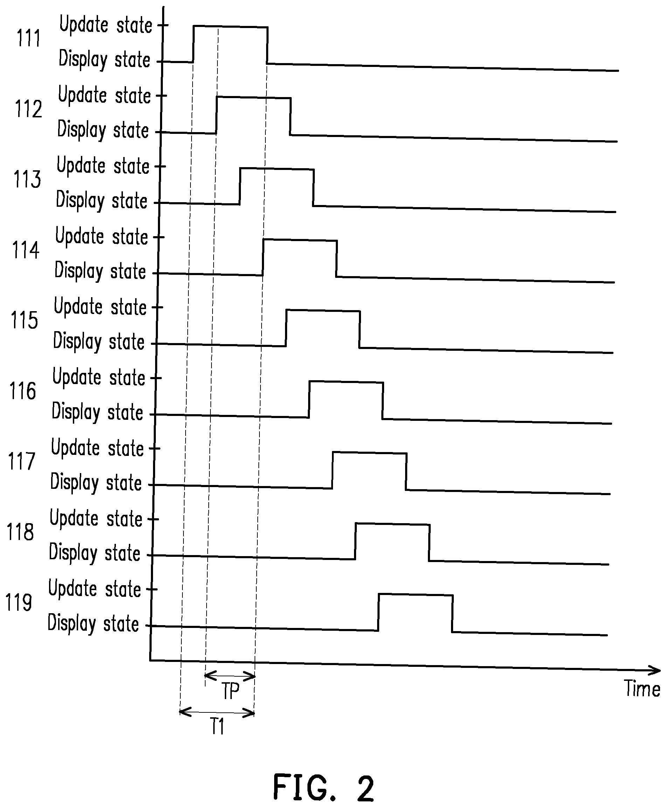

FIG. 1 is a schematic structural diagram of a serial electronic label in an embodiment of the disclosure, and FIG. 2 is a frame update timing diagram of the serial electronic label of FIG. 1. Referring to FIG. 1 and FIG. 2, a serial electronic label 100 in this embodiment includes a plurality of energy saving displays 110 arranged in a row (e.g., the energy saving displays 111, 112, 113, 114, 115, 116, 117, 118, and 119 in FIG. 1) and a controller 120. In FIG. 1, nine energy saving displays 110 are used as an example, but the disclosure does not limit the number of the energy saving displays 110. In other embodiments, the serial electronic label 100 may also have other numbers of the energy saving displays 110. In this embodiment, each of the energy saving displays 110 is an electrophoretic display. However, in other embodiments, each of the energy saving displays 110 may also be a reflective liquid crystal display or a cholesteric liquid crystal display. In this embodiment, the energy saving displays 110 (i.e., the electrophoretic displays) are electronic paper displays. Each of the energy saving displays 110 has a frame update time when updating a display frame. Since the electrophoretic displays need to redistribute electrophoretic particles in a display medium layer during frame updating, some time is required. Therefore, in an embodiment, a length T1 of the frame update time of each of the energy saving displays 110 is 10 seconds to 20 seconds, as shown in FIG. 2. During the frame update time, the display frame of the energy saving display 110 may be blurry or flashing.

The controller 120 is electrically connected to the energy saving displays 110 and is configured to make the energy saving displays 110 update the display frames in a sequence by a one-to-plurality control method. The frame update times of any two energy saving displays 110 adjacent in the sequence partially overlap each other, wherein a length TP of the partially overlapped frame update times is as shown in FIG. 2.

In FIG. 2, the polyline in the row labeled "111" represents the timing of the state of the energy saving display 111, the polyline in the row labeled "112" represents the timing of the state of the energy saving display 112, and the meanings of "113" to "119" follow accordingly. When the polyline is at the height of the update state in the figure, it represents that the energy saving display 110 at that time (if looking at the first polyline, it is the energy saving display 111) is in the process of updating the display frame. When the polyline is at the height of the display state in the figure, it represents that the energy saving display 110 at that time (if looking at the first polyline, it is the energy saving display 111) is in the state of stably displaying a static display frame.

In the embodiment of FIG. 2, the sequence in the above-mentioned "the energy saving displays 110 update the display frames in a sequence" is the same as the arrangement order of the energy saving displays 110 from an end to another end, i.e., the sequence from the energy saving display 111 to the energy saving display 119 in FIG. 2. Therefore, the energy saving display 111 and the energy saving display 112 are two energy saving displays 110 adjacent in the sequence, and the energy saving display 112 and the energy saving display 113 are two energy saving displays 110 adjacent in the sequence. The frame update times of the energy saving display 111 and the energy saving display 112 partially overlap each other, and the length TP of the partially overlapped frame update times is as shown in FIG. 2. In an embodiment, the length TP of the partially overlapped frame update times of any two energy saving displays 110 adjacent in the sequence is X% of the length T1 of the frame update time of each of the energy saving displays, wherein 5 ≤ X < 100.

In the serial electronic label 100 in this embodiment, the energy saving displays 110 update the display frames in a sequence, and the frame update times of any two energy saving displays 110 adjacent in the sequence partially overlap each other. Therefore, the serial electronic label 100 in the embodiment of the disclosure may achieve a special display effect (e.g., an effect similar to a marquee) by using the allocation of the frame update times of the energy saving displays 110. The special display effect may be used as an advertisement effect and is compatible with the effect of reducing labor cost for electronic labels.

In this embodiment, the serial electronic label 100 further includes a battery pack 130, electrically connected to the controller 120 and the energy saving displays 110, and provides a power to the energy saving displays 110 by a single battery pack method. In this way, the situations of excessively high cost and different energy saving displays 110 having their own batteries resulting in different power levels may be avoided.

In this embodiment, the serial electronic label 100 may further include an external power supply unit 140, electrically connected to the battery pack 130 to charge the battery pack. In an embodiment, the external power supply unit 140 is, for example, a solar power supply module. However, in other embodiments, the serial electronic label 100 may also not include the external power supply unit 140, and the external power supply unit 140 is optional.

In the embodiment of FIG. 1, making the energy saving displays 110 update the display frames in the above-mentioned sequence refers to updating the entire display frames including all colors of the energy saving displays 110. For example, the display frames shown by the energy saving displays 114, 115, and 116 are transition frames in the frame update state, which may be flashing frames or blurry frames. However, in an embodiment, making the energy saving displays 110 update the display frames in the above-mentioned sequence may include updating a single color in the display frame or updating a partial area in the display frame.

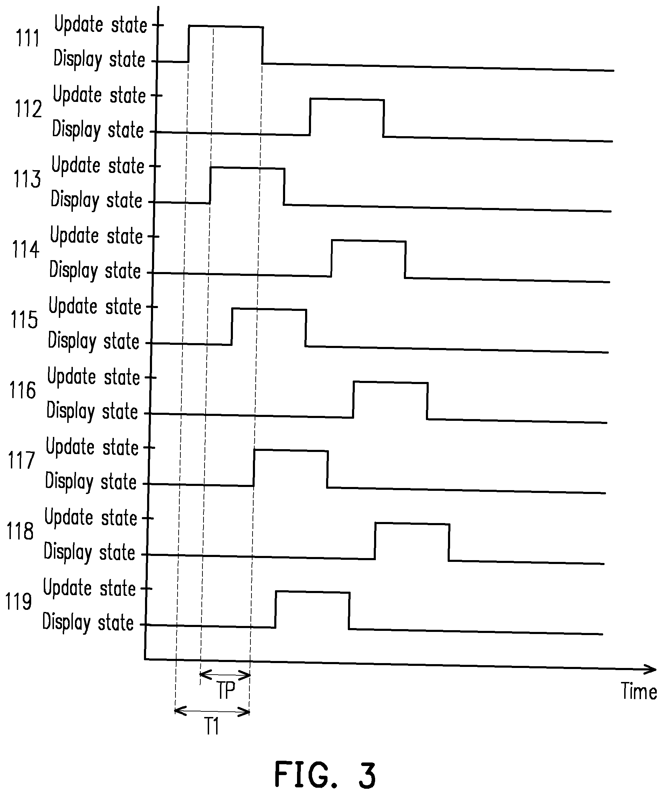

FIG. 3 is another frame update timing diagram of the serial electronic label of FIG. 1. In FIG. 2, the sequence in the above-mentioned "the energy saving displays 110 update the display frames in a sequence" is the same as the arrangement order of the energy saving displays 110 from an end to another end. However, in FIG. 3, the sequence in the above-mentioned "the energy saving displays 110 update the display frames in a sequence" is different from the arrangement order of the energy saving displays 110 from an end to another end. It may be any other sequence. For example, in FIG. 3, the sequence of the energy saving displays 110 performing frame update is the energy saving displays 111, 113, 115, 117, 119, 112, 114, 116, and 118. That is, the energy saving displays perform frame update in a sequence of 111, 113, 115, 117, 119, 112, 114, 116, and 118. FIG. 3 is just one example. In other embodiments, any other sequence may also be used to achieve different display or advertisement effects.

In an embodiment, the controller 120 is, for example, a central processing unit (CPU), a microprocessor, a digital signal processor (DSP), a programmable controller, a programmable logic device (PLD), or other similar devices or a combination of these devices. The disclosure is not limited thereto. In addition, in an embodiment, the functions of the controller 120 may be implemented as multiple codes. These codes are stored in a memory and executed by the controller 120. Alternatively, in an embodiment, the functions of the controller 120 may be implemented as one or more circuits. The disclosure does not limit whether the functions of the controller 120 are implemented by software or hardware.

Referring to FIG. 1 again, in this embodiment, the serial electronic label 100 may include a carrying base 150. The energy saving displays 110 are disposed on the carrying base 150 and are arranged from an end of the carrying base 150 to another end of the carrying base 150.

In summary, in the serial electronic label in the embodiment of the disclosure, the energy saving displays update the display frames in a sequence, and the frame update times of any two energy saving displays adjacent in the sequence partially overlap each other. Therefore, the serial electronic label in the embodiment of the disclosure may achieve a special display effect (e.g., an effect similar to a marquee) by allocating the frame update times of the energy saving displays, and is compatible with the effect of reducing labor cost for electronic labels.

## Claims

1. A serial electronic label (100), comprising:
a plurality of energy saving displays (110, 111, 112, 113, **114,** 115, 116, 117, 118, 119) arranged in a row, wherein each of the plurality of energy saving displays (110, 111, 112, 113, **114,** 115, 116, 117, 118, 119) has a frame update time when updating a display frame; and
a controller (120), electrically connected to the plurality of energy saving displays (110, 111, 112, 113, **114,** 115, 116, 117, 118, 119), and configured to make the plurality of energy saving displays (110, 111, 112, 113, **114,** 115, 116, 117, 118, 119) update the plurality of display frames in a sequence by a one-to-plurality control method, wherein the plurality of frame update times of any two energy saving displays (110, 111, 112, 113, **114,** 115, 116, 117, 118, 119) adjacent in the sequence partially overlap each other.

2. The serial electronic label (100) according to claim 1, wherein the sequence is the same as an arrangement order of the plurality of energy saving displays (110, 111, 112, 113, 114, 115, 116, 117, 118, 119) from an end to another end.

3. The serial electronic label (100) according to claim 1, wherein the plurality of energy saving displays (110, 111, 112, 113, 114, 115, 116, 117, 118, 119) are a plurality of electrophoretic displays.

4. The serial electronic label (100) according to claim 1, wherein the plurality of energy saving displays (110, 111, 112, 113, 114, 115, 116, 117, 118, 119) are a plurality of reflective liquid crystal displays or a plurality of cholesteric liquid crystal displays.

5. The serial electronic label (100) according to claim 1, wherein a length (T1) of the frame update time of each of the plurality of energy saving displays (110, 111, 112, 113, 114, 115, 116, 117, 118, 119) is 10 seconds to 20 seconds.

6. The serial electronic label (100) according to claim 1, wherein a length (TP) of the plurality of partially overlapped frame update times of any two energy saving displays (110, 111, 112, 113, 114, 115, 116, 117, 118, 119) adjacent in the sequence is X% of the length (T1) of the frame update time of each of the plurality of energy saving displays (110, 111, 112, 113, 114, 115, 116, 117, 118, 119), wherein 5 ≤ X < 100.

7. The serial electronic label (100) according to claim 1, further comprising a battery pack (130), electrically connected to the controller (120) and the plurality of energy saving displays (110, 111, 112, 113, 114, 115, 116, 117, 118, 119), wherein the battery pack (130) provides a power to the plurality of energy saving displays (110, 111, 112, 113, 114, 115, 116, 117, 118, 119) by a single battery pack method.

8. The serial electronic label (100) according to claim 7, further comprising an external power supply unit (140), electrically connected to the battery pack (130).

9. The serial electronic label (100) according to claim 8, wherein the external power supply unit (140) is a solar power supply module.

10. The serial electronic label (100) according to claim 1, wherein making the plurality of energy saving displays (110, 111, 112, 113, 114, 115, 116, 117, 118, 119) update the plurality of display frames in the sequence comprises updating a single color in the display frame or updating a partial area in the display frame.
